# EUROPÄISCHE PATENTANMELDUNG

(11) **EP 2 324 967 A2**
(43) Veröffentlichungstag der Anmeldung: **25.05.2011**
(21) Anmeldenummer: 10179832.0
(22) Anmeldetag: 27.09.2010
(51) Int. Cl.: B25J 9/16

(54) **System und Verfahren zur Kollisionserkennung bei Fertigungs- oder Montageautomaten**

(30) Priorität: 24.11.2009 DE 102009047033
(71) Anmelder: Robert Bosch GmbH, 70442 Stuttgart (DE)
(72) Erfinder: Schlaich, Peter, 71229 Leonberg (DE); Rueb, Andreas, 71679 Asperg (DE); Frangen, Joachim, 74081 Heilbronn (DE)

(57) **Zusammenfassung**

Es wird ein System und ein Steuerungsverfahen zur Kollisionserkennung bei Fertigungs- oder Montageautomaten (1) vorgeschlagen, insbesondere zur Überwachung von Annäherungen von Bedienern (4) an einen solchen Automaten. Der Fertigungs- oder Montageautomat (1) ist dazu über eine Kräfte-Momenten Sensor (2) auf einem Maschinengestell (3) gehalten, es ist eine Kräfte-Momenten-Überwachung (7) vorhanden, an deren erstem Eingang die von dem Kräfte-Momenten-Sensor (2) gemessenen Komponenten (Fx, Fy, Fz, Tx, Ty, Tz) und an deren zweiten Eingang Sollwerte einer Steuerung des Fertigungs- oder Montageautomaten (1) zur Bildung eines Modells (13) anliegen und es ist aus einer Differenz (14) zwischen den gemessenen Komponenten (Fx, Fy, Fz, Tx, Ty, Tz ) und den Werten des Modells (13) eine Kollisionskraft (6) zwischen dem Bediener (4) und dem Fertigungs- oder Montageautomaten (1) herleitbar.

## Beschreibung

### Stand der Technik

Die Erfindung betrifft ein System und ein Verfahren zur Kollisionserkennung bei Fertigungs- oder Montageautomaten, auch Roboter oder Industrieroboter genannt, insbesondere zur Überwachung von Annäherungen von Bedien- oder Überwachungspersonal an einen solchen Automaten nach der Gattung des Hauptanspruchs und der nebengeordneten Ansprüche.

Bei solchen Fertigungs- oder Montageautomaten kann ein Zusammentreffen von Menschen, z. B. ein Bediener oder Servicepersonal für die Fertigungs- oder Montageautomaten, mit bewegten Maschinen bzw. Maschinenteilen zu Kollisionen führen, die den Menschen und/oder die Funktion des Automaten gefährden. Es ist an sich bekannt, dass bei einer frühzeitigen Erkennung einer solchen Annäherung oder gar bei einer Berührung Maßnahmen getroffen werden können, um eine Kollision zu vermeiden oder zumindest die Energie der Kollision zu reduzieren. Dies ist oft eine wichtige Voraussetzung für eine Zulassung des gleichzeitigen Aufenthalts von Mensch und Maschine im gleichen Arbeitsraum.

Weiterhin ist an sich bekannt, dass zur automatischen Annäherungs- und/oder Kollisionserkennung eine Umfeldüberwachung der Maschine mit unterschiedlichen Sensorprinzipien und Sensoren, wie zum Beispiel optische Sensoren, Ultraschallsensoren oder kapazitive Sensoren, bzw. auch mit einer Kontaktkrafterfassung über den piezoelektrischen Effekt, vorgenommen wird. Solche Sensoren können in der Regel in Sonderfällen eingesetzt werden, um beispielsweise einfach geformte Maschinenteile mit definierten Bewegungsbahnen zu überwachen, sodass bei einer Erkennung einer Annäherung eines Menschen beispielsweise ein sicheres Abbremsen der Antriebe oder der Bearbeitungsaggregate der Maschine ausgelöst werden kann.

Andererseits ist bei relativ komplex geformten Oberflächen oder einer komplexen Bahnbewegung des gefährdenden Maschinenteils eine lückenlose sensorische Umfeldüberwachung oft nur mit sehr hohem Aufwand oder eventuell auch gar nicht möglich. So kann beispielsweise an Kanten und Hinterschneidungen der Maschinenoberfläche die optische Erfassung durch Abschattungen behindert sein oder es kann auch eine Integration von Sensoren an einem zu geringen Bauraum scheitern.

Ein eventuell möglicher Ansatz zur Kollisionsverhinderung ist auch, dass bei solchen Maschinen, wie Montageautomaten, häufig ein Schutzzaun eingesetzt wird, sodass durch eine erzwungene Trennung des Menschen von der Maschine die Sicherheit des Bedieners gewährleistet ist. Hierbei können dann beispielsweise zur Teileübergabe sichere Schleusen im Schutzzaun vorhanden sein. Mit einem solchen Schutzzaun ist allerdings keine direkte Zusammenarbeit an einem Fertigungs- oder Montageautomaten mehr möglich, da hier der Mensch und die Maschine nicht zur gleichen Zeit den gleichen Arbeitsraum nutzen können.

Ein weiterer Ansatz mit einer ähnlichen Wirkung ist eine sogenannte Zweihand-Bedienung, bei der die Maschine nur dann arbeitet, wenn beide Hände des Bedieners jeweils einen Taster bedienen. Die Taster sind dabei soweit außerhalb des Arbeitsraumes angeordnet, dass eine Gefährdung des Bedieners durch die laufende Maschine weitgehend ausgeschlossen ist. Bei diesem Konzept können somit der Mensch und die Maschine zwar im Prinzip den gleichen Arbeitsraum nutzen, aber nicht gleichzeitig. Beispielsweise können keine gemeinsamen Handhabungsvorgänge von Mensch und Maschine durchgeführt werden.

Es ist beispielweise aus der DE 37 14 932 A1 bekannt, einen Industrieroboter auf einen kugelgelagerten in x- und y-Richtung beweglichen Schlitten zu montieren, sodass beim Auftreten von Kontaktkräften durch eine Kollision in x- oder y-Richtung der Industrieroboter aus seiner Mittellage gedrängt wird und so ein Sensorsignal ausgelöst wird, welches den Industrieroboter abschaltet. Dieses System hat zum einen den Nachteil, dass z. B. Kräfte in z-Richtung und einige Kraftmomente nicht sicher abgefangen werden, zum anderen werden die Kollisionskräfte im wesentlichen durch die Masse des Industrieroboters bestimmt und können bei schweren Industrierobotern sehr hohe, die Sicherheit gefährdende Werte annehmen.

Aus der EP 1 955 831 A2 ist weiterhin bekannt, dass eine Überwachung eines Greiferarms eines Industrieroboters vorgenommen wird, wobei ein Kraftsensor zwischen einem Roboterflansch und dem Greiferarm montiert ist. Äußere Kräfte, die auf den Greiferarm einwirken, werden dabei nicht detektiert. Das bekannte System speichert vor jeder Roboterbewegung die Kraftwerte als sogenannte "reference value" ab und während der Bewegung wird permanent geprüft, ob die Differenz zwischen der aktuell gemessenen Kraft und dem Referenzwert eine Schwelle übersteigt. Mit diesem bekannten Verfahren werden also nur Kraftunterschiede bewertet und keine absoluten Kräfte. Für eine sichere Kollisionsvermeidung ist dies in der Regel nicht ausreichend.

### Offenbarung der Erfindung

Es kann somit als eine Aufgabe der Erfindung angesehen werden, eine sichere Erkennung von Kollisionen zwischen Bedienern und bewegten Teilen eines Fertigungs- oder Montageautomaten zu gewährleisten, wobei diese Teile nicht auf Greiferarme beschränkt sind.

Die Erfindung geht dabei von einem System zur Kollisionserkennung bei Fertigungs- oder Montageautomaten aus, das insbesondere zur Überwachung von Annäherungen von Bedienern an einen solche Automaten insgesamt geeignet ist. Erfindungsgemäß ist dazu der gesamte Fertigungs- oder Montageautomat über einen Kräfte-Momenten-Sensor auf einem Maschinengestell so befestigt, dass damit in vorteilhafter Weise eine umfassende Kräfte-Momenten-Überwachung vorgenommen werden kann.

An einem ersten Eingang des Bausteins der Kräfte-Momenten-Überwachung werden dazu die von dem Kräfte-Momenten-Sensor gemessenen Komponenten Fx, Fy, Fz, Tx, Ty, Tz und an einem zweiten Eingang werden Sollwerte einer Steuerung des Fertigungs- oder Montageautomaten zur Bildung eines Modells angelegt. Aus einer Differenz zwischen den gemessenen Komponenten und den Werten oder Parametern des Modells ist dann eine Kollisionskraft zwischen dem Bediener und dem Fertigungs- oder Montageautomaten herleitbar.

Der erfindungsgemäße Vorschlag bedient sich daher im Wesentlichen eines physikalisches Bewegungsmodell des Fertigungs- oder Montageautomaten, welches die Achsstellung des Fertigungs- oder Montageautomaten zeitdiskret als Eingangsdatenstrom erhält und daraus vorzugsweise auch unter Berücksichtigung von Trägheitskräften und Gravitation in Echtzeit Vergleichswerte für die gemessenen Komponenten ermittelt. Im Ergebnis erkennt somit der Fertigungs- oder Montageautomat an allen Stellen seiner Oberflache angreifende Kräfte und Momente in beliebigen Raumrichtungen und kann diese auswerten.

Bei einem Überschreiten des Wertes der Differenz zwischen den gemessenen Komponenten und den Werten des Modells über einen min/max-Grenzwert kann somit ein Sicherheitssignal und/oder eine Sicherheitsschaltung erzeugt werden. Die min/max-Grenzwerte können dabei so festgelegt werden, dass in allen Betriebszuständen des Fertigungs- oder Montageautomaten eine für den Bediener sichere Begrenzung der Kollisionskräfte erreichbar ist, sodass zuverlässig verhindert werden kann, dass ein Mensch gefährdet oder verletzt wird. Die Grenzwerte der Kollisionskräfte und - momente können dabei verschiedenen Einsatzfällen individuell angepasst werden.

Als Sicherheitsschaltung kann zum Beispiel ein Not-Aus für den sofortigen Stillstand des Fertigungs- oder Montageautomaten angewendet werden. Hierbei können dann aber auch einzelne Achsen des Fertigungs- oder Montageautomaten trotz einer Sicherheitsschaltung freigeschaltet werden, um ev. ein Einklemmen eines Bedieners zu verhindern.

Im einzelnen kann dabei die Steuerung so aufgebaut sein, dass Sollwerte über die Achspositionen des Fertigungs- oder Montageautomaten über einen Ausgang von der Steuerung zu der Kräfte-Momenten-Überwachung und über einen weiteren Ausgang zu einem Antriebsverstärker, insbesondere einem Achsverstärker, für den Fertigungs- oder Montageautomaten zur Verfügung gestellt werden. Alternativ können die Sollwerte aber auch über einen einzigen Ausgang weitergeleitet werden.

Gemäß einer ersten Ausführungsform ist das Maschinengestell für den Fertigungs- oder Montageautomaten ortsfest. Gemäß einer zweiten Ausführungsform ist das Maschinengestell für den Fertigungs- oder Montageautomaten zum Beispiel auf einem Fahrgestell beweglich.

Die erfindungsgemäße Lösung ist auch mit weiteren Sicherheitssystemen kombinierbar, sodass die Sicherheit des Gesamtsystems damit steigt. Wenn beispielsweise ein vorhandenes berührungsloses, den Menschen erfassendes Sensorsystem eine Kollision präventiv verhindert, so wirkt die hier vorgeschlagene erfindungsgemäße zusätzliche Lösung als sichere Rückfalllösung bei einem Ausfall des berührungslosen Sensorsystems.

Bei einem erfindungsgemäßen Verfahren zur Steuerung eines zuvor beschriebenen Systems wird die Erfassung und Weiterleitung der von dem Kräfte-Momenten-Sensor gemessenen Komponenten an die Kräfte-Momenten-Überwachung und der Vergleich mit den Parametern des Modells zur Bildung der Differenz in einem vorgegebenen identischen Zeitraster, zum Beispiel mit 1 kHz, durchgeführt.

Weiterhin wird erfindungsgemäß vorgeschlagen, dass vor der Inbetriebnahme des Systems eine Applikationsphase durchgeführt wird, in der die kinematische Struktur der Bewegungsabläufe des Fertigungs- oder Montageautomaten manuell oder programmgesteuert eingegeben wird, dass vom Fertigungs- oder Montageautomaten dann definierte kollisionsfreie Bewegungen ausgeführt werden und dabei die Komponenten Fx, Fy, Fz, Tx, Ty, Tz als Messwerte des Kräfte-Momenten-Sensors in die Kräfte-Momenten-Überwachung eingelesen werden und daraus dann die Parameter für das Modell berechnet werden.

Bei einer vorteilhaften Weiterbildung des erfindungsgemäßen Verfahrens werden auch Gewichtskräfte von in einem Greiferarm eingespannten Werkstücken oder auch sonstige hohe Prozesskräfte dadurch berücksichtigt, dass eine Erweiterung des Modells vorgenommen wird, indem der Fertigungs- oder Montageautomaten in der Applikationsphase mit und ohne Werkstück simuliert wird und zur Umschaltung zwischen den beiden Modellen dann ein Signal über den aktuellen Zustand des Greiferarms an die Kräfte-Momenten-Überwachung weitergeleitet wird.

Bei einer Anwendung des Systems und des zuvor beschriebenen Verfahrens bei einem beweglichen Maschinengestell können auch die Bewegungsparameter des Maschinengestells sensorisch erfasst oder auch die Bewegungsparameter von einer Bewegungssteuerung abgeleitet und an die Kräfte-Momenten-Überwachung übertragen werden, wobei dann in einem entsprechend erweiterten Modell auch die Bewegungsparameter des Maschinengestells, wie vorhergehend beschrieben, berücksichtigt werden.

Weiterhin wird ein Verfahren zur Kollisionserkennung bei Fertigungs- oder Montageautomaten vorgeschlagen.

Zusammenfassend lassen sich generell folgende Vorteile mit dem erfindungsgemäßen System und Verfahren realisieren:
- Es wird eine echte Zusammenarbeit zwischen Mensch (Bediener) und Roboter (Fertigungs- oder Montageautomaten) ermöglicht, d. h., es ist auch ein gleichzeitiger Aufenthalt im gleichen Arbeitsraum sicher gestaltbar.
- Es erfolgt eine Reaktion auf Kollisionskräfte und -momente, die in beliebigen Raumrichtungen und an beliebiger Stelle auf den Fertigungs- oder Montageautomaten einwirken.
- Auch Kollisionen mit Werkstücken, die der Fertigungs- oder Montageautomaten im Greifwerkzeug (Greifarm) führt, werden erkannt. Auch Kollisionen mit Systemkomponenten, die vom Fertigungs- oder Montageautomaten mitgeführt werden, werden erkannt.
- Somit wird eine lückenlose Absicherung jeder gefahrbringenden Bewegung des Fertigungs- oder Montageautomaten durchgeführt.
- Ferner ist eine hohe Eigensicherheit erreichbar, d.h auch bei einem Systemfehler führt der Ausfall von Systemkomponenten oder Signalpfaden zwischen den Bausteinen zur Aktivierung einer Sicherheitsabschaltung.
- Die Erfindung ist neben einer OEM-Lösung von Herstellern der Fertigungs- oder Montageautomaten auch als Nachrüstlösung implementierbar, um auch konventionelle Fertigungs- oder Montageautomaten (Industrieroboter) abzusichern.
- Die Erfindung ist darüber hinaus auch mit weiteren Sicherheitssystemen kombinierbar, um die Gefährdung des Gesamtsystems zu reduzieren.

### Kurze Beschreibung der Zeichnung

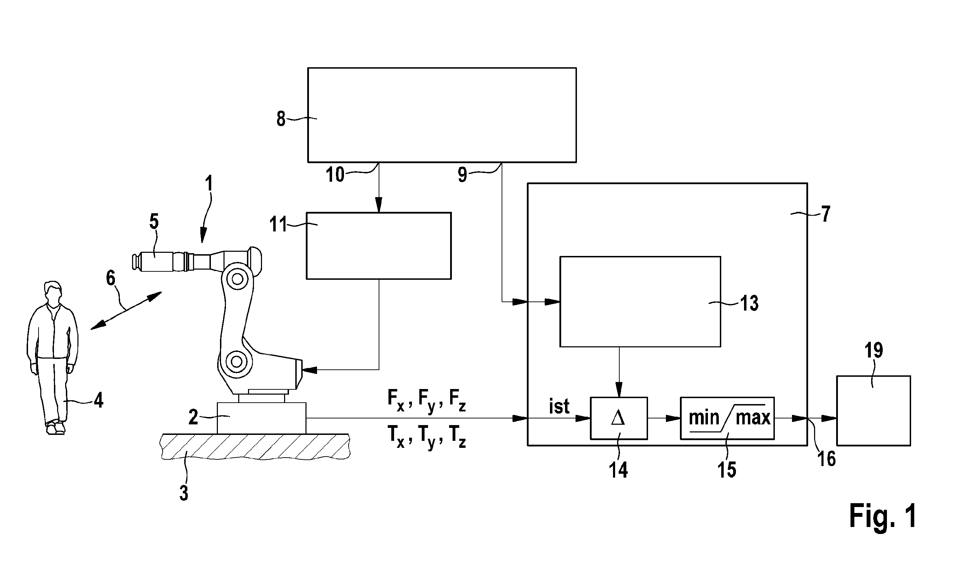

Die Erfindung wird nachfolgend anhand des in der Figur 1 der Zeichnung schematisch gezeigten Systems zur Kollisionserkennung bei einem Fertigungs- oder Montageautomaten erläutert.

### Weg zu Ausführung der Erfindung

In Figur 1 ist ein System zur Erfassung von Kräften und Momenten an einem Fertigungs- oder Montageautomaten 1 gezeigt, der über einen Kräfte-Momenten-Sensor 2 ortsfest auf einem Maschinengestell 3 gelagert ist. Der Fertigungs- oder Montageautomat 1 befindet sich in einem gemeinsamen Arbeitsraum mit einem Bediener 4, wobei im Fall einer in der Regel nicht gewünschten Kollision zwischen dem Bediener 4 und beispielweise mit einem Greiferarm 5 des Fertigungs- oder Montageautomaten 1 Kollisionskräfte 6 entstehen.

Der Kräfte-Momenten-Sensor 2 ist hierbei zwischen dem Fuß des Fertigungs- oder Montageautomaten 1 und dem Maschinengestell 3 so eingebaut, dass alle Kräfte und Momente, die am Fertigungs- oder Montageautomaten 1 und damit an seinem Fuß auftreten, über den Kräfte-Momenten-Sensor 2 in das Maschinengestell 3 abgeleitet werden. Der Kräfte-Momenten-Sensor 2 besitzt dazu eine hohe Federsteifigkeit, sodass dessen Einfluss auf die Positioniergenauigkeit des Fertigungs- oder Montageautomaten1 im Betrieb vernachlässigt werden kann.

Der Kräfte-Momenten-Sensor 2 nach der Figur 1 misst die Kräfte und Momente am Fuß des Fertigungs- oder Montageautomaten1 in allen 6 Freiheitsgraden, d. h. die Kräfte Fx, Fy, Fz und die Momente Tx, Ty, Tz. Diese Messwerte werden dann zyklisch mit einer geeigneten Frequenz, beispielsweise in einem Zeitraster von 1 kHz, von einer Kräfte-Momenten-Überwachung 7 ausgelesen.

Andererseits überträgt, vorzugsweise im gleichen Zeitraster wie beim Auslesen der Kräfte und Momente aus dem Kräfte-Momenten-Sensor 2, eine Steuerung 8 für den Fertigungs- oder Montageautomaten1 die aktuellen Sollwerte der Achspositionen des Fertigungs- oder Montageautomaten1 über einen Ausgang 9 an die Kräfte-Momenten-Überwachung 7. Über diesen Ausgang 9 oder, wie hier dargestellt, über einen separaten Ausgang 10 werden auch die Sollwerte für einen Achsverstärker 11 geliefert, der gemäß Pfeil 12 die Achsantriebe des Fertigungs- oder Montageautomaten1 bedient.

Aus den Sollwerten am Ausgang 9 werden in der Kräfte-Momenten-Überwachung 7 anhand eines symbolisch dargestellten Modells 13 des Fertigungs- oder Montageautomaten1 die Kräfte und Momente aufgezeichnet, die vom Kraft-Momenten-Sensor 2 gemessen werden müssten, wenn nur Trägheits- und Gravitationskräfte auf den Fertigungs- oder Montageautomaten1 wirken würden. Das Ergebnis dieser Aufzeichnung und Berechnung, die ebenfalls im zuvor erwähnten Zeitraster durchgeführt werden sollte, sind die modellhaften Komponenten der Kräfte und Momente in allen 6 Freiheitsgraden, wobei das gleiche Koordinatensystem x, y, z wie bei der Erfassung mit dem Kraft-Momenten-Sensor 2 zugrunde gelegt wird.

Anschließend ermittelt die Kräfte-Momenten-Überwachung 7 für jeden Freiheitsgrad einen Wert Δ einer Differenz 14 zwischen dem jeweiligen berechneten und dem gemessenen Wert. Bei einer Übereinstimmung des tatsächlichen Verhaltens des Fertigungs- oder Montageautomaten 1 mit dem Verhalten des Modells 13 ist der Wert Δ der Differenz 14 aller Komponenten stets null, solange keine äußeren Kräfte wie zum Beispiel Kollisionskräfte 6, auf den Fertigungs- oder Montageautomaten 1 einwirken oder sich die Masse des Fertigungs- oder Montageautomaten 1, beispielsweise durch Aufnehmen oder Ablegen eines hier nicht gezeigten Werkstückes, nicht ändert.

Im Fall des Auftretens einer Kollisionskraft 6 weicht mindestens ein Wert Δ der Differenz 14 vonnulll ab, sodass durch einen komponentenweisen Vergleich der Differenzwerte Δ beispielsweise mit zugeordneten oberen und unteren min/max-Grenzwerten 15 ein binäres Signal gewonnen werden kann, welches beim Überschreiten der zulässigen min/max-Grenzwerte 15 zum Beispiel logisch "1" wird. Eine logische ODER-Verknüpfung der Binärsignale aller 6 Komponenten Fx, Fy, Fz, Tx, Ty, Tz kann dann von der Kräfte-Momenten-Überwachung 7 ein Ausgangssignal am Ausgang 16 bereitstellen. Beispielsweise kann hiermit ein Not-Aus 17 aktiviert werden, um den Fertigungs- oder Montageautomaten 1 unverzüglich in einen sicheren Zustand zu versetzen, beispielsweise durch einen Energieabbau mittels Abbremsen, durch einen Bewegungsstopp oder durch eine definierte Freischaltung von Achsen, um ein Einklemmen des Bedieners 4 auszuschließen.

Es ist weiterhin möglich, dass entsprechend der erforderlichen Kinematik auch einzelne Achsen des Fertigungs- oder Montageautomaten 1 freigeschaltet werden, um nach einer Notabschaltung die Kinematik manuell bewegen zu können und so ein Einklemmen des Bedieners 4 zu verhindern.

Das Modell 13 und dessen Parameter, z. B. Massen- und Trägheitsmomente der Einzelglieder und der Abstände der Drehgelenke müssen dabei vor einer Inbetriebnahme an den jeweiligen Fertigungs- oder Montageautomaten 1 angepasst werden. Dies kann manuell, automatisch oder teilautomatisch erfolgen. So kann beispielsweise vor der Inbetriebnahme eine Applikationsphase durchgeführt werden, wobei zu Beginn der Applikationsphase die kinematische Struktur der Bewegungsabläufe des Fertigungs- oder Montageautomaten 1 manuell eingegeben werden kann und anschließend werden dann vom Fertigungs- oder Montageautomaten 1 definierte kollisionsfreie Bewegungen ausgeführt. Wahrend dieser Phase werden die Messwerte des Kräfte-Momenten-Sensors 2 eingelesen und die Parameter für das Modell 13 daraus automatisch berechnet.

Die min/max-Grenzwerte 15 der Kräfte und Momente werden dabei vorzugsweise so festgelegt, dass in allen Betriebszuständen des Fertigungs- oder Montageautomaten 1 eine für den Bediener 4 sichere Begrenzung der Kollisionskräfte 6 erreicht wird. Es ist dabei auch vorteilhaft, wenn nicht nur Kollisionskräfte 6 an einem Werkzeug (Greiferarm 5), sondern entlang der gesamten kinematischen Kette der Bewegungsabläufe des Fertigungs- oder Montageautomaten 1 erfasst werden.

Bei dem bisher beschriebenen Verfahren sind Gewichtskräfte von im Greiferarm 5 eingespannten Werkstücken oder hohe Prozesskräfte zunächst prinzipiell nicht von Kollisionskräften 6 unterscheidbar. Damit diese Gewichts- oder Prozesskräfte nicht zum Auslösen der Notabschaltung 17 führen, müssen sie entweder begrenzt werden, zum Beispiel bei einer Verwendung von leichten Teilen (z. B. < 1 kg), oder im Modell 13 berücksichtigt werden. Dazu ist ein erweitertes Modell 13 erforderlich, welches den Fertigungs- oder Montageautomaten 1 mit und ohne Werkstück simuliert. Zur Umschaltung zwischen den beiden Modellen 13 kann dazu ein Signal über den aktuellen Zustand des Greiferarms 5 (auf/zu) an die Kräfte-Momenten-Überwachung 7 weitergeleitet werden.

Um dynamische Spitzen der Kollisionskraft 6 bei einer schnellen Bewegung, zum Beispiel des Greiferarms 5, zu vermeiden, kann die maximale Bewegungsgeschwindigkeit des Fertigungs- oder Montageautomaten 1 auf einen sicheren Wert begrenzt werden.

Die Erfindung ist auch dann realisierbar, wenn zum Beispiel das Maschinengestell 3, auf dem der Kräfte-Momenten-Sensor 2 mit dem Fertigungs- oder Montageautomaten 1 befestigt ist, selbst in Bewegung ist, beispielsweise bei einem mobilen Fertigungs- oder Montageautomaten 1 mit Fahrgestell. Mit einer entsprechenden, hier nicht gezeigten Erweiterung können dann auch zusätzlich die Bewegungsparameter des Maschinengestells 3 sensorisch erfasst werden, beispielsweise mit entsprechenden Beschleunigungs- und Drehratensensoren unterhalb des Fertigungs- oder Montageautomaten 1. Es ist aber auch möglich, dass die Bewegungsparameter von einer ggf. vorhandenen Bewegungssteuerung abgeleitet und an die Kräfte-Momenten-Überwachung 7 übertragen werden, wobei dazu ein nochmals erweitertes physikalisches Modell 13 erforderlich ist, welches auch die Bewegung des Maschinengestells 3 abbildet.

## Patentansprüche

1. System zur Kollisionserkennung bei Fertigungs- oder Montageautomaten (1), insbesondere zur Überwachung von Annäherungen von Bedienern (4) oder sonstigem Personal an einen solchen Automaten, **dadurch gekennzeichnet, dass** der Fertigungs- oder Montageautomat (1) über eine Kräfte-Momenten-Sensor (2) auf einem Maschinengestell (3) gehalten ist, dass eine Kräfte-Momenten-Überwachung (7) vorhanden ist, an deren erstem Eingang die von dem Kräfte-Momenten-Sensor (2) gemessenen Komponenten (Fx, Fy, Fz, Tx, Ty, Tz) und an deren zweiten Eingang Sollwerte einer Steuerung des Fertigungs- oder Montageautomaten (1) zur Bildung eines Modells (13) anliegen und dass aus einer Differenz (14) zwischen den gemessenen Komponenten (Fx, Fy, Fz, Tx, Ty, Tz) und den Werten des Modells (13) eine Kollisionskraft (6) zwischen dem Bediener (4) und dem Fertigungs- oder Montageautomaten (1) herleitbar ist.

2. System nach Anspruch 1, **dadurch gekennzeichnet, dass** beim Überschreiten des Wertes (Δ) der Differenz (14) zwischen den gemessenen Komponenten (Fx, Fy, Fz, Tx, Ty, Tz ) und den Parametern des Modells (13) über einen min/max-Grenzwert (15) ein Sicherheitssignal und/oder eine Sicherheitsschaltung erzeugbar ist.

3. System nach Anspruch 2, **dadurch gekennzeichnet, dass** die min/max-Grenzwerte (15) so festgelegt sind, dass in allen Betriebszuständen des Fertigungs- oder Montageautomaten (1) eine für den Bediener (4) sichere Begrenzung der Kollisionskräfte (6) erreichbar ist.

4. System nach Anspruch 2 oder 3, **dadurch gekennzeichnet, dass** als Sicherheitsschaltung ein Not-Aus (17) für den sofortigen Stillstand des Fertigungs- oder Montageautomaten (1) erwirkbar ist.

5. System nach Anspruch 2, 3 oder 4, **dadurch gekennzeichnet, dass** einzelne Achsen des Fertigungs- oder Montageautomaten (1) trotz einer Sicherheitsschaltung freischaltbar sind.

6. System nach einem der vorhergehenden Ansprüche, **dadurch gekennzeichnet, dass** die Steuerung (8) Sollwerte über die Achspositionen des Fertigungs- oder Montageautomaten (1) über einen Ausgang (9) der Kräfte-Momenten-Überwachung (7) und über einen Ausgang (10) einem Antriebsverstärker, insbesondere einem Achsverstärker (11), für den Fertigungs- oder Montageautomat (1) zur Verfügung stellt.

7. System nach einem der vorhergehenden Ansprüche, **dadurch gekennzeichnet, dass** das Maschinengestell (3) ortsfest ist.

8. System nach einem der Ansprüche 1 bis 6, **dadurch gekennzeichnet, dass** das Maschinengestell (3) beweglich ist.

9. Verfahren zur Steuerung eines Systems nach einem der vorhergehenden Ansprüche, **dadurch gekennzeichnet, dass** eine Erfassung und Weiterleitung der von dem Kräfte-Momenten-Sensor (2) gemessenen Komponenten (Fx, Fy, Fz, Tx, Ty, Tz) an die Kräfte-Momenten-Überwachung (7) und der Vergleich mit den Parametern des Modells (13) zur Bildung der Differenz (14) in einem vorgegebenen identischen Zeitraster durchgeführt wird.

10. Verfahren zur Steuerung eines Systems nach einem der vorhergehenden Ansprüche, **dadurch gekennzeichnet, dass** vor der Inbetriebnahme des Systems eine Applikationsphase durchgeführt wird, in der die kinematische Struktur der Bewegungsabläufe des Fertigungs- oder Montageautomaten (1) manuell oder programmgesteuert eingegeben wird, vom Fertigungs- oder Montageautomaten (1) dann definierte kollisionsfreie Bewegungen ausgeführt werden und dabei die Komponenten (Fx, Fy, Fz, Tx, Ty, Tz) als Messwerte des Kräfte-Momenten-Sensors (2) in die Kräfte-Momenten-Überwachung (7) eingelesen und daraus die Parameter für das Modell (13) berechnet werden.

11. Verfahren nach Anspruch 10, **dadurch gekennzeichnet, dass** auch Gewichtskräfte von in einem Greiferarm (5) eingespannten Werkstücken oder hohe Prozesskräfte dadurch berücksichtigt werden, dass eine Erweiterung des Modells (13) dadurch vorgenommen wird, dass der Fertigungs- oder Montageautomaten (1) in der Applikationsphase mit und ohne Werkstück simuliert wird und zur Umschaltung zwischen den beiden Modellen (13) ein Signal über den aktuellen Zustand des Greiferarms (5) an die Kräfte-Momenten-Überwachung (7) weitergeleitet wird.

12. Verfahren nach einem der Ansprüche 9 bis 11 in Verbindung mit Anspruch 8, **dadurch gekennzeichnet, dass** bei einem beweglichen Maschinengestell (3) die Bewegungsparameter des Maschinengestells (3) sensorisch erfasst werden oder die Bewegungsparameter von einer Bewegungssteuerung abgeleitet und an die Kräfte-Momenten-Überwachung (7) übertragen werden, wobei in einem entsprechend erweiterten Modell (13) auch die Bewegungsparameter des Maschinengestells (3) berücksichtigt sind.

13. Verfahren zur Kollisionserkennung bei Fertigungs- oder Montageautomaten (1), **dadurch gekennzeichnet, dass** ein Kräfte-Momenten-Sensor (2), der den Fertigungs- oder Montageautomat (1) auf einem Montagegestell (3) hält, Komponenten (Fx, Fy, Fz, Tx, Ty, Tz) misst, dass an einem ersten Eingang einer Kräfte-Momenten-Überwachung (7) die von dem Kräfte-Momenten-Sensor (2) gemessenen Komponenten (Fx, Fy, Fz, Ty, Ty, Tz) und an einem zweiten Eingang der Kräfte-Momenten-Überwachung (7) Sollwerte einer Steuerung des Fertigungs- oder Montageautomaten (1) zur Bildung eines Modells (13) anliegen und dass aus einer Differenz (14) zwischen dem gemessenen Komponenten (Fx, Fy, Fz, Tx, Ty, Tz) und den Werten des Modells (13) eine Kollisionskraft (6) zwischen einem Bediener (4) und dem Fertigungs- oder Montageautomaten (1) hergeleitet wird.
